# EUROPÄISCHE PATENTANMELDUNG

(11) **EP 1 972 918 A2**
(43) Veröffentlichungstag der Anmeldung: **24.09.2008**
(21) Anmeldenummer: 08000328.8
(22) Anmeldetag: 10.01.2008
(51) Int. Cl.: G01M 13/04

(54) **Verfahren und Einrichtung zur Kontrolle der Laufbahnen von Grosswälzlagern**

(30) Priorität: 20.03.2007 DE 102007013160
(71) Anmelder: ThyssenKrupp Fördertechnik GmbH, 45143 Essen (DE)
(72) Erfinder: Birkheuer, Horst Volker, 40721 Hilden (DE); Leymann, Helmut, 47228 Duisburg (DE)
(74) Vertreter: Dahlkamp, Heinrich-Leo

(57) **Zusammenfassung**

Verfahren zur Kontrolle der Laufbahnen von mit Wälzkörpern ausgerüsteten Großwälzlagern, indem über eine vorzugsweise verschließbare Öffnung mindestens eine optische Aufnahmeeinrichtung in den Bereich des jeweiligen Wälzkörperbauraumes eingeführt und positioniert und der Zustand mindestens einer Laufbahn für die Wälzkörper bei Schwenkung der Lagerringe optisch erfasst wird.

## Beschreibung

Die Erfindung betrifft ein Verfahren zur Kontrolle der Laufbahnen von mit Wälzkörpern ausgerüsteten Großwälzlagern.

Durch die EP 0 529 354 B1 ist eine Vorrichtung zum Erkennen und zum Überwachen von Schäden an Laufbahnen oder angrenzenden Bereichen der Lagerringe bei Wälzlagern bekannt geworden, bei welcher ein oder mehrere Sensoren im Wälzkörperbauraum zwischen den Wälzkörpern angeordnet sind, deren Messsignale auf elektromagnetischem Wege einer Antenne außerhalb des Lagers zugeführt werden.

Der DE 197 55 000 C1 ist eine Verschleißmessvorrichtung für Großwälzlager zu entnehmen, bestehend aus zwei Lagerringen und zwischen ihnen angeordneten, einen Wälzkörperbauraum bildenden Wälzkörpern, mit einer Anzeige, die eine vorgegebene Auslenkung zwischen den Lagerringen anzeigt und einer Sonde, die in einer Öffnung eines Lagerringes angeordnet ist und mit ihrem Ende in einen Hohlraum ragt und mit einer Fläche des anderen Lagerringes in Kontakt treten kann. Der Hohlraum ist eine Nut, in dem der Sonde gegenüberliegenden Lagerring. Die Flächen der Nut weisen jeweils einen Abstand zur Sonde auf, der einem in der zugehörigen Richtung vorgegebenen Verschleißmaß entspricht.

In der DE 203 16 544 U1 wird eine Überwachungsvorrichtung zur Überwachung von Großwälzlagern beschrieben, die zwei Lagerringe und zwischen diesen laufende Wälzkörper aufweist, mit einem Sensor zur Erfassung von Relativbewegungen der Lagerringe zueinander. Mindestens zwei berührungslose Wegmesssensoren sind vorgesehen, von denen einer zur Bestimmung von Radialbewegungen und einer zur Bestimmung von Axialbewegungen der Lagerringe relativ zueinander eingesetzt sind. Eine mit den Wegmesssensoren verbindbare Auswerteeinheit ist ebenfalls vorgesehen, die die bestimmten Radial- und Axialbewegungen mit vorgegebenen Grenzwerten vergleicht und anhand des Vergleichs einen Lagerzustand bestimmt.

Für Großgeräte, wie sie zum Beispiel als Fördergeräte in Tagebauen eingesetzt sind, werden zwischen Ober- und Unterbau üblicher Weise Drehlager mit Laufbahnen großen Durchmessers eingesetzt. Diese Drehlager bestehen aus einem oberen und einem unteren bearbeiteten Lagerring, zwischen denen in Käfigen geführte Wälzkörper die eigentliche Schwenkbewegung des Oberbaus auf dem Unterbau reibungsarm ermöglichen und gleichzeitig die großen Auflasten und Momente aus dem Oberbau tragen. Die Laufringe werden vielfach aus vergüteten zähen Werkstoffen gefertigt, während die Kugeln aus extrem hartem Material bestehen, so dass sich unterschiedliche Verschleißzustände einstellen. Durch insgesamt oder zeitweise mangelnde Schmierung, eingedrungene Verunreinigungen, Überlastungen oder Schäden an den Wälzkörpern kommt es auch zu Beschädigungen der Laufbahnen in Form von Pittingbildung oder kavernenartigen Ausbrüchen.

Den normalen Verschleiß durch Abrieb im Laufe der Jahre kann man beispielsweise außen an den Lagern durch Messen der vertikalen Abstände zwischen der oberen und der unteren Laufbahn dokumentieren. Beschädigungen oder lokaler Verschleiß an den Laufbahnen jedoch können heute nur nach aufwändigem abgesichertem Anheben des Oberbaus ermittelt werden. Dazu müssen der gesamte Oberbau des Gerätes statisch gesichert und die Wälzkörper samt Käfigen ausgeräumt werden. Die gleichzeitig erforderliche Demontage von Dichtungselementen ist ebenfalls aufwendig. Im Gegensatz zum gleichmäßigen Verschleiß der Laufbahnen, bei dessen Beobachtung der Zeitpunkt für einen notwendig werdenden Lagerringaustausch im Voraus bestimmt werden kann, ist die Entwicklung von Laufbahnbeschädigungen, beispielsweise durch beschädigte Wälzkörper, nicht prognostizierbar.

Da ein Lagerringaustausch mehrere Wochen dauern kann und zwingend mit einem entsprechend langen Gerätestillstand einhergeht, ist eine regelmäßige Beobachtung im Rahmen präventiver Wartung zwar erwünscht, jedoch aus wirtschaftlichen Gründen bis dato nicht sinnvoll gewesen.

Der Erfindung liegt die Aufgabe zugrunde, ein Verfahren und eine Einrichtung zur Kontrolle der Laufbahnen von mit Wälzkörpern ausgerüsteten Großwälzlagern bereit zu stellen, bei welchen mit vertretbarem wirtschaftlichen Aufwand innerhalb vorgebbarer Zeitabstände bei gering gehaltener Stillstandzeit der Geräte eine Kontrolle der Laufbahnen des jeweiligen Großwälzlagers herbeigeführt werden kann, ohne dass hierzu die Wälzkörper, Käfige und Dichtelemente demontiert werden müssen.

Diese Aufgabe wird gelöst durch ein Verfahren zur Kontrolle der Laufbahnen von mit Wälzkörpern ausgerüsteten Großwälzlagern, indem über eine in der Regel verschließbare Öffnung mindestens eine optische Aufnahmeeinrichtung in den Bereich des jeweiligen Wälzkörperbauraumes eingeführt und positioniert und der Zustand mindestens einer Laufbahn für die Wälzkörper bei Schwenkung der Lagerringe optisch erfasst wird.

Vorteilhafte Weiterbildungen des erfindungsgemäßen Verfahrens sind den zugehörigen verfahrensgemäßen Unteransprüchen zu entnehmen.

Diese Aufgabe wird auch gelöst durch eine Einrichtung zur Kontrolle der Laufbahnen von mit Wälzkörpern ausgerüsteten Großwälzlagern, gebildet durch mindestens eine optische Aufnahmeeinrichtung, die im Bereich eines die Wälzkörper aufnehmenden Käfigs innerhalb des Wälzkörperbauraumes des Großwälzlagers angeordnet ist.

Vorteilhafte Weiterbildungen der erfindungsgemäßen Einrichtung sind den zugehörigen gegenständlichen Unteransprüchen zu entnehmen.

Die minimale Größe der Wälzlager, auf die dieses Verfahren und die entsprechende Einrichtung anwendbar sind, hängt nur von den Abmessungen der kleinsten verfügbaren Aufnahmeeinrichtung ab. Diese muss samt Adapter in den Raum passen, den einer der Wälzkörper des Lagers im Käfig einnimmt. Im Zuge der Miniaturisierung von Kameras sinkt auch die Größe der prüf- bzw. überwachbaren Wälzlager.

Erfindungsgemäß kommt mindestens eine elektronische Kamera, wie zum Beispiel ein Video-Camcorder, zum Einsatz, die vorteilhafterweise über eine verschließbare Öffnung innerhalb eines der beiden Lagerringe, vorzugsweise des oberen Lagerringes, vorübergehend anstelle eines einzelnen Wälzkörpers in den Wälzkörperbauraum eingesetzt wird. Diese in der Regel verschließbare Öffnung ist zum Austausch eventuell defekter Wälzkörper üblicherweise vorhanden und kann für die erfindungsgemäße Kontrollmaßnahme genutzt werden.

Die optische Aufnahmeeinrichtung ruht dann in dem durch den entnommenen Wälzkörper frei gewordenen Raum des Käfigs, insbesondere auf dessen Randbereich.

Die eingangs angesprochenen Großgeräte können in der Regel den Oberbau relativ zum Unterbau schwenken. Da dabei der obere Lagerring gegenüber dem unteren Lagerring den doppelten Weg zurücklegt wie der Käfig mit den Wälzkörpern und der Aufnahmeeinrichtung sind zur Erfassung der gesamten unteren Laufbahn ein kompletter Rechts- und Linksschwenk oder zwei 360°-Schwenkbewegungen erforderlich.

Die generierten Videobilder der optischen Aufnahmeeinrichtung können auf Band, DVD, Festplatte oder sonstigen Speichermedien innerhalb der optischen Aufnahmeeinrichtung aufgezeichnet werden. Es ist auch eine Direktübertragung der Bildinformation auf ein externes Speichermedium und/oder ein Kontrolldisplay denkbar. Die Auswertung der Videobilder der Kameraeinheiten kann hierbei sofort oder aber später durchgeführt werden.

Nach dem angesprochenen Prüfschwenken kann der Zustand der jeweiligen Laufbahn optisch beurteilt werden. Auch eine kontinuierliche oder wiederholte Beobachtung über die Weiterentwicklung vorhandener Beschädigungen ist möglich, so dass eventuelle Stillstandszeiten des Großgerätes und Reparaturen langfristig eingeplant werden können.

Nach Abschluss der optischen Aufnahmen kann die optische Aufnahmeeinrichtung wieder über die verschließbare Öffnung des vorzugsweise oberen Laufringes entnommen und der temporär entfernte Wälzkörper wieder in den Käfig eingesetzt werden.

Bedarfsweise kann durch eine eingebaute Skalierung die Größenbeurteilung der Pittings und anderer Beschädigungen, wie zum Beispiel an den Trennfugen der Laufbahnsegmente, ermöglicht werden.

Zur ungetrübten Aufnahme der jeweiligen Oberfläche wird das Restöl in der jeweiligen Laufbahn durch mit der optischen Aufnahmeeinrichtung in Wirkverbindung stehende Abstreifelemente entfernt.

Sofern in der jeweiligen Laufbahn größere Verunreinigungen (zum Beispiel Teile eines beschädigten Wälzkörpers) vorhanden sind, können selbige durch die als Pflug wirkenden Abstreifelemente zurück zur verschließbaren Öffnung geführt und aus dem Wälzkörperbauraum entfernt werden.

Es ist ebenfalls denkbar, weitere Messelemente, zum Beispiel zur Rauhigkeits- oder Distanzmessung, im Bereich der optischen Aufnahmeeinrichtung vorzusehen, die bedarfsweise auch integraler Bestandteil der optischen Aufnahmeeinrichtung sein können.

Der jeweils zum Einsatz gelangende Camcorder kann mit eigener Lichtquelle ausgerüstet werden, so dass eine gute Bildqualität gegeben ist und entweder über eine integrierte oder eine externe Stromquelle, z.B. einen Akku, mit Strom versorgt werden.

Die optische Aufnahmeeinrichtung wird vorteilhafterweise von einem entsprechend der Wälzkörperform als Halter ausgebildeten, Adapter aufgenommen, der bedarfsweise für verschiedene Wälzkörperabmessungen passend einstellbar sein kann.

Des Weiteren besteht die Möglichkeit, die optische Aufnahmeeinrichtung mit optischen Weitwinkelaufsätzen zu bestücken, um das jeweilige Beobachtungsfeld so groß als möglich zu gestalten.

Bei der kontinuierlichen Aufnahme der gesamten Laufbahnoberfläche ist die Orientierung über den jeweiligen Aufnahmeort auf der Laufbahn durch die deutlich sichtbaren Segmentnähte, die jeder Lagerring hat, möglich, da der Lagerring in vielen Fällen wegen seiner Größe nicht aus einem Stück besteht, sondern aus Segmenten zusammengesetzt ist. Alternativ bzw. ergänzend kann der Schwenkwinkel der Lagerringe zueinander kontinuierlich verfolgt und aufgezeichnet werden.

Zum Schutz der optischen Aufnahmeeinrichtung gegen Spritzöl kann selbige zumindest außerhalb der Objektivlinse mit einer Folie abgedichtet werden.

Einem weiteren Gedanken der Erfindung gemäß kann der Adapter mit zwei Camcordern bestückt werden, deren Objektive in einander entgegengesetzte Richtungen weisen. Durch diese Maßnahme können gleichzeitig beide Laufbahnen des Großwälzlagers kontrolliert werden.

Die Aufnahmekapazität der Aufzeichnungsmedien ist nach heutigem Stand mehr als ausreichend, so dass der Einbau modernster, aber auch handelsüblicher, Camcorder möglich ist, wodurch die Investitionskosten der erfindungsgemäßen Einrichtung gering gehalten werden können.

Der Erfindungsgegenstand ist anhand eines Ausführungsbeispiels in der Zeichnung dargestellt und wird wie folgt beschrieben. Es zeigen:
- Figur 1: Querschnitt durch ein Großwälzlager;
- Figur 2: Längsschnitt durch Figur 1;
- Figur 3: Draufsicht auf Figur 1.

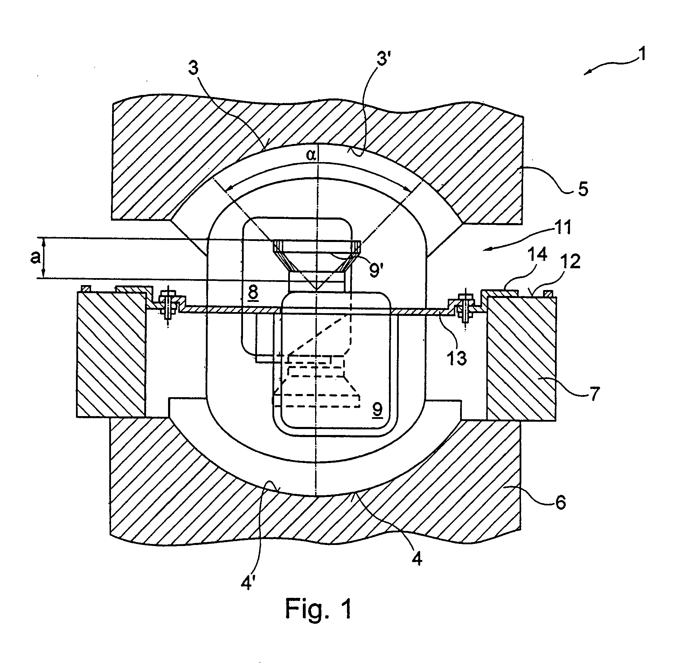

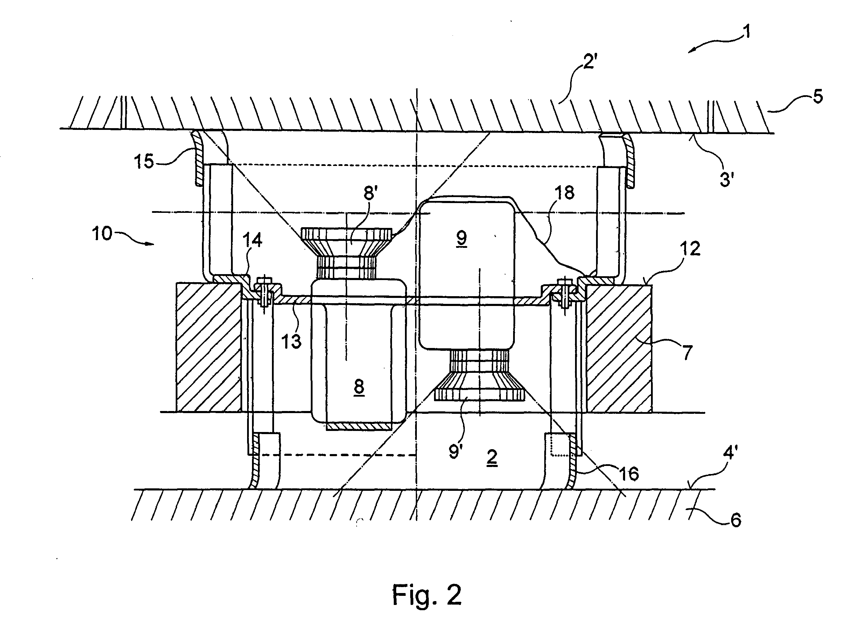

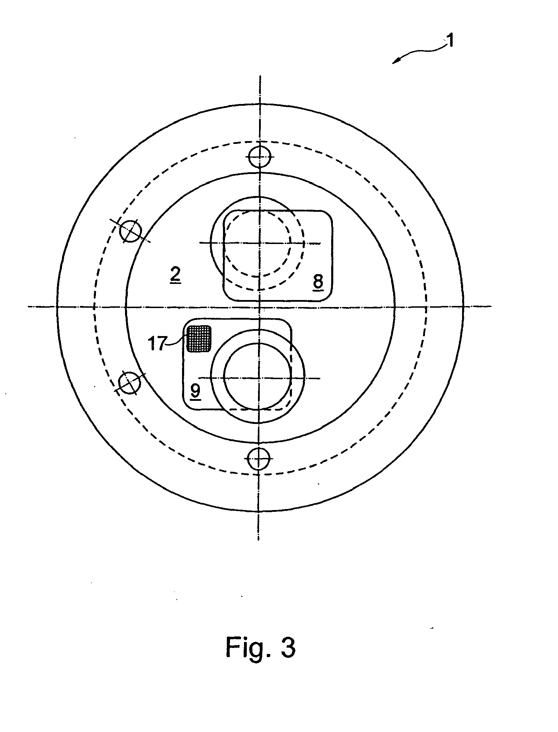

Die Figuren 1 bis 3 zeigen den Bereich der verschließbaren Öffnung 2 eines Großwälzlagers 1 in verschiedenen Ansichten bzw. Schnitten mit an Stelle eines Wälzkörpers eingesetzter Aufnahmeinrichtung.

Die nicht weiter dargestellten Wälzkörper sollen in diesem Beispiel als Kugeln ausgebildet sein, so dass die Innenkonturen 3,4 der nur angedeuteten Lagerringe 5,6 kreissegmentförmig ausgebildet sind. Die Wälzkörper sind in Käfigen 7 positioniert. Ein jeder Lagerring 5,6 ist mit einer zugehörigen Laufbahn 3',4' für die Wälzkörper versehen. Sollen nun die Laufbahnen 3',4' hinsichtlich ihres Verschleißzustandes einer Überprüfung unterzogen werden, kann über die verschließbare Öffnung 2 in einem Lagerring 5 ein einzelner Wälzkörper aus dem Käfig 7 entfernt werden. Anstelle dieses Wälzkörpers werden in diesem Beispiel zwei elektronische Kameras 8,9, die im Bereich eines als Halterung ausgebildeten Adapters 10 befestigt sind, in den Bereich des Wälzkörperbauraumes 11 eingebracht. Der Adapter 10 ruht auf einer oberen Fläche 12 des Käfigs 7. Am Adapter 10, der bedarfsweise aus verschiedenen Blechkörpern 13,14 gebildet sein kann, werden obere und untere Ölabstreifelemente 15,16 relativ zur Laufbahn 3',4' platziert. Der Adapter 10 kann bedarfsweise einstellbar sein, um unterschiedlichen Wälzkörperdurchmessern Rechnung zu tragen. Die optischen Aufnahmeeinrichtungen 8,9 sind als Video-Camcorder mit integrierter Lichtquelle 17, zum Beispiel einem LED-Licht, ausgebildet. Die Camcorder 8,9 sind hinsichtlich ihrer Objektive 8',9' entgegengesetzt gerichtet, so dass beim Verschwenken der Lagerringe 5,6 gleichzeitig sowohl die Laufbahn 3' als auch die Laufbahn 4' einer optischen Überprüfung unterzogen werden können. Es kann auch nur eine Aufnahmeeinrichtung 8,9 vorhanden sein, welche innerhalb des Wälzkörperbauraumes 11 geschwenkt werden kann, um die Laufbahnen 3',4' nacheinander zu erfassen.

In Figur 1 angedeutet ist der Bereich a, der beispielsweise einen Weitwinkelaufsatz 8',9' der Kamera 8,9 definieren kann, wobei ein Inspektionswinkel α gegeben ist. Durch Auswahl entsprechender Weitwinkelaufsätze können größtmögliche Beobachtungsfelder für die jeweilige Laufbahn 3',4' erreicht werden.

Der untere Lagerring 6 kann mit dem Unterbau eines Fördergroßgerätes, beispielsweise eines Schaufelradbaggers, verbunden sein, während der obere Lagerring 5 mit dem schwenkbaren Oberbau des Fördergroßgerätes in Wirkverbindung steht. Nach Positionierung der Camcorder 8,9, respektive des sie tragenden Adapters 10, im Bereich des Käfigs 7, werden die Lagerringe 5,6 relativ zueinander verschwenkt und die Laufbahnen 3',4' gleichzeitig optisch abgetastet. Die ermittelten Daten werden in diesem Beispiel auf einer im jeweiligen Camcorder 8,9 enthaltenen Festplatte gespeichert und später ausgewertet.

Lediglich angedeutet ist eine Folie 18, die zumindest Teile der Camcorder 8,9, mit Ausnahme der Objektivlinse, vor Spritzöl oder dergleichen Verschmutzungen schützt. Bei der Relativschwenkbewegung der Lagerringe 5,6 wird über die Abstreifer 15,16 Restöl entfernt, so dass eine ungetrübte Aufnahme der Oberflächen der Laufbahnen 3',4' möglich ist. Eventuell im Wälzkörperbauraum 11 vorhandene Verunreinigungen (zum Beispiel Teile eines beschädigten Wälzkörpers) können durch die als Pflug wirkenden Abstreifer 15,16 zurück zur verschließbaren Öffnung 2 geführt und von dort aus entfernt werden. Nachdem die Kontrolle der Laufbahnen 3',4' beendet ist, wird der Adapter 10 samt Camcorder 8,9 aus dem Käfig 7 entnommen, die temporär entfernte Kugel wieder eingesetzt und die verschließbare Öffnung 2 wieder mit einem Schloss 2' verschlossen. Derartige Kontrollen können in vorgebbaren Zeitabständen wiederholt werden, um durch Vergleich der Beobachtungs- bzw. Messergebnisse ein genaues Abbild des Verschleißzustandes und eventueller Beschädigungen der jeweiligen Laufbahn 3',4' zu generieren.

### Bezugszeichenliste

- 1: Großwälzlager
- 2: verschließbare Öffnung
- 2': Schloss (Verschluss)
- 3: Kontur
- 3': Laufbahn
- 4: Kontur
- 4': Laufbahn
- 5: Lagerring
- 6: Lagerring
- 7: Käfig
- 8: Kamera (Camcorder)
- 8': Objektiv
- 9: Kamera (Camcorder)
- 9': Objektiv
- 10: Adapter
- 11: Wälzkörperbauraum
- 12: obere Fläche von 7
- 13: Blechkörper
- 14: Blechkörper
- 15: Ölabstreifelement
- 16: Ölabstreifelement
- 17: integrierte Lichtquelle (LED-Licht)
- 18: Folie

- a: Bereich für Objektiv (8',9') bzw. Weitwinkelaufsatz
- α: Inspektionswinkel

## Patentansprüche

1. Verfahren zur Kontrolle der Laufbahnen (3',4') von mit Wälzkörpern ausgerüsteten Großwälzlagern (1), indem über eine vorzugsweise verschließbare Öffnung (2) mindestens eine optische Aufnahmeeinrichtung (8,9) in den Bereich des jeweiligen Wälzkörperbauraumes (11) eingeführt und positioniert und der Zustand mindestens einer Laufbahn (3',4') für die Wälzkörper bei Schwenkung der Lagerringe (5,6) optisch erfasst wird.

2. Verfahren nach Anspruch 1, **dadurch gekennzeichnet, dass** die optische Aufnahmeeinrichtung (8,9) über die Öffnung (2) im jeweiligen Lagerring (5,6) des Großwälzlagers (1) in den Bereich des Wälzkörperbauraumes (11) eingeführt und dort positioniert wird.

3. Verfahren nach Anspruch 1 oder 2, **dadurch gekennzeichnet, dass** die optische Aufnahmeeinrichtung (8,9) anschließend wieder aus dem Bereich des Wälzkörperbauraumes (11) entfernt wird.

4. Verfahren nach einem der Ansprüche 1 bis 3, **dadurch gekennzeichnet, dass** aus dem jeweiligen Wälzkörperbauraum (11) ein einzelner Wälzkörper entfernt, anstelle dieses Wälzkörpers die optische Aufnahmeeinrichtung (8,9) in den Bereich des jeweiligen Wälzkörperbauraumes (11) eingebracht und dort positioniert wird.

5. Verfahren nach einem der Ansprüche 1 bis 4, **dadurch gekennzeichnet, dass** nach der optischen Überprüfung der jeweiligen Laufbahn (3',4') diese Vorgänge wieder rückgängig gemacht werden.

6. Verfahren nach einem der Ansprüche 1 bis 5, **dadurch gekennzeichnet, dass** die optische Aufnahmeeinrichtung (8,9) durch eine elektronische Kamera, insbesondere einen Video-Camcorder, gebildet wird, wobei die optischen Bilder auf einem internen oder externen Speichermedium aufgezeichnet werden.

7. Verfahren nach einem der Ansprüche 1 bis 6, **dadurch gekennzeichnet, dass** die aufgenommenen Bilder elektronisch in einen Bereich außerhalb des Großwälzlagers (1) übertragen und online betrachtet werden.

8. Verfahren nach einem der Ansprüche 1 bis 7, **dadurch gekennzeichnet, dass** durch Auswertung der Bilder der Beschädigungsgrad der jeweiligen Laufbahn (3',4') ermittelt wird.

9. Verfahren nach einem der Ansprüche 1 bis 8, **dadurch gekennzeichnet, dass** zwei optische Aufnahmeeinrichtungen (8,9) mit unterschiedlicher Ausrichtung des jeweiligen Objektives (8',9') in den Bereich des Wälzkörperbauraumes (11) eingeführt werden, so dass gleichzeitig zwei zueinander beabstandete Laufbahnen (3',4') unterschiedlicher Lagerringe (5,6) des Großwälzlagers (1) einer optischen Kontrolle unterzogen werden.

10. Verfahren nach einem der Ansprüche 1 bis 9, **dadurch gekennzeichnet, dass** mit der optischen Aufnahmeeinrichtung (8,9) Ölabstreifelemente (15,16) in Wirkverbindung gebracht werden.

11. Verfahren nach einem der Ansprüche 1 bis 10, **dadurch gekennzeichnet, dass** im Bereich der optischen Aufnahmeeinrichtung (8,9) zusätzliche Messelemente, insbesondere zur Rauhigkeits- oder Distanzmessung, vorgesehen werden.

12. Verfahren nach einem der Ansprüche 1 bis 11, **dadurch gekennzeichnet, dass** die optische Aufnahmeeinrichtung (8,9) mit einer optischen oder elektronische Skalierung versehen wird, die eine Größenbeurteilung der Beschädigungen der Laufbahnen (3',4') erlaubt.

13. Verfahren nach einem der Ansprüche 1 bis 12, **dadurch gekennzeichnet, dass** die optische Aufnahmeeinrichtung (8,9) mit einer integrierten Lichtquelle (17) ausgerüstet wird.

14. Verfahren nach einem der Ansprüche 1 bis 13, **dadurch gekennzeichnet, dass** die optische Aufnahmeeinrichtung (8,9) mit einem Objektiv (8',9') fester oder veränderbarer Brennweite bestückt wird.

15. Verfahren nach einem der Ansprüche 1 bis 14, **dadurch gekennzeichnet, dass** zumindest die jeweilige optische Aufnahmeeinrichtung (8,9) zum Schutz gegen Öl, zumindest außerhalb der Objektivlinse von einer Folie (18) umgeben wird.

16. Einrichtung zur Kontrolle der Laufbahnen (3',4') von mit Wälzkörpern ausgerüsteten Großwälziagern (1), gebildet durch mindestens eine optische Aufnahmeeinrichtung (8,9), die im Bereich eines die Wälzkörper aufnehmenden Käfigs (7) innerhalb des Wälzkörperbauraumes (11) des Großwälzlagers (1) angeordnet ist.

17. Einrichtung nach Anspruch 16, **dadurch gekennzeichnet, dass** die optische Aufnahmeeinrichtung (8,9) durch eine elektronische Kamera, insbesondere einen Video-Camcorder, gebildet ist.

18. Einrichtung nach Anspruch 16 oder 17, **dadurch gekennzeichnet, dass** zwei optische Aufnahmeeinrichtungen (8,9) mit unterschiedlich ausgerichteten Objektiven (8',9') im Bereich des Käfigs (7) angeordnet sind.

19. Einrichtung nach einem der Ansprüche 16 bis 18, **dadurch gekennzeichnet, dass** die optische Aufnahmeeinrichtung (8,9) innerhalb eines bedarfsweise einstellbaren, als Halterung ausgebildeten, Adapters (10) platziert ist, der anstelle eines einzelnen Wälzkörpers mit dem Käfig (7) in Wirkverbindung steht.

20. Einrichtung nach einem der Ansprüche 16 bis 19, **dadurch gekennzeichnet, dass** der Adapter (10) mit Ölabstreifelementen (15,16) versehen ist.

21. Einrichtung nach einem der Ansprüche 16 bis 20, **dadurch gekennzeichnet, dass** die jeweilige optische Aufnahmeeinrichtung (8,9) zumindest außerhalb der Objektivlinse von einer Folie (18) umschlossen ist.
